# EUROPÄISCHE PATENTANMELDUNG

(11) **EP 4 814 471 A1**
(43) Veröffentlichungstag der Anmeldung: **30.09.2026**
(21) Anmeldenummer: 26167245.5
(22) Anmeldetag: 24.03.2026
(51) Int. Cl.: G01M 9/00, G01B 11/25

(54) **OPTISCHES OBERFLÄCHENMESSSYSTEM ZUR OBERFLÄCHENMESSUNG EINES OBJEKTS IN EINEM WINDKANAL SOWIE WINDKANAL MIT EINEM OPTISCHEN OBERFLÄCHENMESSSYSTEM UND VERFAHREN ZUR OPTISCHEN OBERFLÄCHENMESSUNG EINES OBJEKTS IN EINEM WINDKANAL**

(30) Priorität: 27.03.2025 DE 102025111872
(71) Anmelder: Deutsches Zentrum für Luft- und Raumfahrt e.V., 53227 Bonn (DE)
(72) Erfinder: Salvi, Ciro, 51147 Köln (DE)
(74) Vertreter: dompatent

(57) **Zusammenfassung**

Optisches Oberflächenmesssystem (1) zu Oberflächenmessung eines Objekts (50) in einem Windkanal (100), mit einer auf einen Untersuchungsbereich (50a) des Objektes (50) gerichteten Kamera (3) und mit mindestens einer Laserlichtvorrichtung (5), die auf den Untersuchungsbereich (50a) des Objektes (50) gerichtet ist, wobei die Laserlichtvorrichtung (5) eine Laserlichtebene erzeugt, die auf eine zu vermessende Oberfläche des Untersuchungsbereichs (50a) des Objektes (50) in einem Winkel α trifft, wobei gilt 5° ≤ α ≤ 90°.

## Beschreibung

Die vorliegende Erfindung betrifft ein optisches Oberflächenmesssystem zur Oberflächenmessung eines Objekts in einem Windkanal sowie einen Windkanal mit einem derartigen Oberflächenmesssystem. Ferner betrifft die vorliegende Erfindung ein Verfahren zur optischen Oberflächenmessung eines Objekts in einem Windkanal.

Windkanäle werden für verschiedene Tests verwendet. Neben aerodynamischen Messungen ist es auch bekannt, dass Hyperschallströmungen nachgebildet werden, sodass eine repräsentative Testumgebung für den Eintritt aus einem extraterrestrischen Bereich in die Atmosphäre auf der Erde geschaffen werden kann.

Beim Eintritt in die Atmosphäre werden beispielsweise Raumfahrzeuge hohen Wärmeströmen ausgesetzt. Daher müssen zuvor am Boden Wärmeschutzsysteme untersucht werden, die die Raumfahrzeuge vor den hohen thermischen Belastungen schützen sollen.

Für derartige Untersuchungen werden sogenannten lichtbogenbeheizte Windkanäle eingesetzt, um die verschiedenen auf dem Markt erhältlichen Materialien für Wärmeschutzsysteme zu untersuchen und wissenschaftlich zu charakterisieren. Um einen Eintritt eines Raumfahrzeugs in eine Atmosphäre möglichst genau zu nachzubilden kann ferner vorgesehen sein, dass den Strömungen in dem Windkanal kleine Partikel zugesetzt werden, um den Einfluss kleiner Staubteilchen beim Eintritt in die Atmosphäre zu untersuchen.

Zur Charakterisierung des Verhaltens von Wärmeschutzsystemen werden verschiedene Parameter gemessen, die sich im Wesentlichen auf die Temperatur an bestimmten Punkten der Oberflächen oder im Inneren der Probe beziehen. Beispielsweise werden Thermoelemente, Thermokameras oder Pyrometer zur Temperaturbestimmung verwendet.

Ein wissenschaftlich sehr relevanter Parameter, der ebenfalls untersucht werden sollte, ist die sogenannte Rückgangsrate der Oberfläche, die durch Abtragung beim Eintritt in die Atmosphäre entsteht. Dieser ist einer der wichtigsten Parameter bei der Konstruktion von Wärmeschutzsystemen und insbesondere bei der Wahl von deren Dicke.

Die Messung der Rückgangsrate in-situ während Versuchen in Windkanälen ist eine große Herausforderung, die insbesondere bei Hyperschallströmungen nur schwierig durchgeführt werden kann.

Es ist daher die Aufgabe der vorliegenden Erfindung, ein optisches Oberflächenmesssystem zur Oberflächenmessung eines Objekts in einem Windkanal bereitzustellen, mit dem die Rückgangsrate der Oberfläche vereinfacht messbar ist. Es ist ferner Aufgabe der vorliegenden Erfindung, einen Windkanal mit einem derartigen Oberflächenmesssystem sowie ein Verfahren zur optischen Oberflächenmessung eines Objekts in einem Windkanal zu schaffen.

Das erfindungsgemäße optische Oberflächenmesssystem ist definiert durch die Merkmale des Anspruchs 1.

Der erfindungsgemäße Windkanal ist definiert durch die Merkmale des Anspruchs 9.

Das erfindungsgemäße Verfahren zur optischen Oberflächenmessung eines Objekts in einem Windkanal ist definiert durch die Merkmale des Anspruchs 12.

Das erfindungsgemäße optische Oberflächenmesssystem zur Oberflächenmessung eines Objekts in einem Windkanal weist eine auf einen Untersuchungsbereich des Objekts gerichtete Kamera und mindestens eine Laserlichtvorrichtung auf, die auf den Untersuchungsbereich des Objekts gerichtet ist. Die Laserlichtvorrichtung erzeugt eine Laserlichtebene, die auf eine zu vermessene Oberfläche des Untersuchungsbereichs in einem Winkel α trifft bzw. die Oberfläche im Winkel α schneidet, wobei gilt: 5° ≤ α ≤ 90°, vorzugsweise 20° ≤ α ≤ 90°.

Es hat sich herausgestellt, dass bei dem Auftreffen einer Laserlichtebene mit der zu vermessende Oberfläche des Untersuchungsbereichs des Objekts an dem Bereich der Oberfläche, auf den die Laserlichtebene auftrifft, ein stark erhellter Bereich unmittelbar an der zu vermessende Oberfläche in Form einer hellen Linie entsteht. Diese kann mittels der Kamera in vorteilhafter Weise aufgenommen werden.

Durch einen Vergleich der durch die Laserlichtebene erzeugten, hellen Linie an der zu vermessende Oberfläche des Untersuchungsbereichs in zeitlich aufeinander folgenden Bildern kann eine Veränderung der Oberfläche des Objekts untersucht bzw. festgestellt werden. Die Auswertung der Bilder kann beispielsweise automatisch erfolgen, indem ein Algorithmus die helle Linie in den Bildern erkennt und vergleicht.

Das erfindungsgemäße Oberflächenmesssystem hat den besonderen Vorteil, dass sowohl die Kamera als auch die Laserlichtvorrichtung zumindest teilweise außerhalb eines Windkanals angeordnet werden können. Die Kamera kann beispielsweise durch ein entsprechendes Fenster auf das Objekt gerichtet sein. Die Laserlichtvorrichtung kann beispielsweise ein Laserlichtquelle aufweisen, die das Laserlicht zur Erzeugung der Laserlichtebene beispielsweise ebenfalls durch ein Fenster in einen Versuchsraum eines Windkanals strahlt. Dadurch sind sowohl die Kamera als auch zumindest Teile der Laserlichtvorrichtung in einem geschützten Bereich und das optische Oberflächenmesssystem kann beispielsweise auch in einem Windkanal, in dem Hochenthalpieströmungen erzeugt werden, verwendet werden.

Vorzugsweise ist vorgesehen, dass gilt: α=90°. Es hat sich herausgestellt, dass bei einem Auftreffwinke zwischen der Laserlichtebene und der zu vermessenden Oberfläche des Untersuchungsbereichs von 90° die sich an der Oberfläche bildende helle Linie in besonders vorteilhafter Weise entsteht, sodass diese durch die Kamera in besonders vorteilhafter Weise erfasst werden kann.

Im Rahmen der Erfindung wird der Winkel α als Winkel zwischen der Laserlichtebene und der Oberfläche verstanden. Bei einer gekrümmten Oberfläche ist der Winkel α der Winkel zwischen der an einem Punkt der gekrümmten Oberfläche gebildeten infinitesimalen Ebene und der Laserlichtebene, oder mit anderen Worten, der Winkel zwischen einer Tangente eines Punkts der gekrümmten Oberfläche und der Laserlichtebene.

Vorzugsweise ist vorgesehen, dass das optische Oberflächenmesssystem eine Objektachse aufweist, in der das Objekt mit einer Mittelachse des Objekts oder des Untersuchungsbereichs anordenbar ist, wobei die Laserlichtvorrichtung die Laserlichtebene parallel zu der Objektachse, vorzugsweise zu der Objektachse ausrichtet. Es kann somit vorgesehen sein, dass die Laserlichtebene echt parallel zu der Mittelachse des Objekts verläuft oder die Objektachse in der Laserlichtebene liegt. Insbesondere bei dem Ausführungsbeispiel, bei dem die Laserlichtebene zu der Objektachse und somit zu der Mittelachse ausgerichtet ist, sodass sich die Mittelachse in der Laserlichtebene befindet, besteht der Vorteil, dass die Veränderung in der Mittelebene des Objekts bzw. des Untersuchungsbereichs untersucht werden kann. Da davon auszugehen ist, dass das Material eines Objekts in der Strömung weitestgehend symmetrisch zu der Mittelachse abgetragen wird, kann durch die Laserlichtebene, die auf die Mittelachse des Objekts bzw. des Untersuchungsbereichs ausgerichtet ist, eine besonders aussagekräftige Messung erfolgen und die Rückgangsrate in vorteilhafter Weise bestimmt werden.

Die Kamera kann eine erste optische Achse aufweise und die Laserlichtvorrichtung eine zweite optische Achse, wobei die erste und die zweite optische Achse vorzugsweise orthogonal zueinander sind. Die erste optische Achse der Kamera und die zweite optische Achse der Laserlichtvorrichtung können dabei die auf den Untersuchungsbereich des Objekts gerichtete Achsen sein. Insbesondere kann vorgesehen sein, dass die erste und die zweite optische Achse in einer Umfangsrichtung versetzt zueinander angeordnet sind. Die Umfangsrichtung ist dabei der um die Objektachse gebildete Umfang. Grundsätzlich kann auch vorgesehen sein, dass das Laserlicht, das von einer Laserquelle der Laserlichtvorrichtung erzeugt wird, ein- oder mehrfach umgelenkt wird, beispielsweise durch Linsen und oder Spiegel der Laserlichtvorrichtung, wobei die zweite optische Achse weiterhin auf den Untersuchungsbereich des Objekts gerichtet ist. Durch die orthogonale Anordnung der ersten und der zweiten optischen Achse kann vorgesehen sein, dass die Kamera quasi seitlich auf die auf das Objekt auftreffende Laserlichtebene blickt, so dass der Untersuchungsbereich und insbesondere die durch das Auftreffen auf die Oberfläche des Untersuchungsbereich entstehende helle Linie besonders vorteilhaft aufgenommen werden kann.

Die erste optische Achse der Kamera kann orthogonal zu der Objektachse sein. Dadurch werden Verzerrungen im Bild aufgrund einer schrägen Perspektive vermieden.

Die Laserlichtvorrichtung kann beispielsweise einen Nd:YAG-Laser als Laserlichtquelle aufweisen. Ein derartiger Laser hat sich als besonders vorteilhaft herausgestellt.

In einer besonders bevorzugten Ausführungsform ist vorgesehen, dass die Laserlichtvorrichtung gepulstes Laserlicht ausgibt, wobei die Kamera mit der Laserlichtvorrichtung synchronisiert ist. Beispielsweise kann die Kamera eine Belichtungszeit von 10 Mikrosekunden aufweisen. Dadurch kann erreicht werden, dass die Kamera lediglich das Licht des Lasers aufnimmt, jedoch die Aufnahme von von dem Objekt emittiertem Licht vermieden wird. Dadurch können besonders vorteilhafte Bilder der hellen Linie entlang der Oberfläche des Objekts aufgenommen werden.

Es kann auch vorgesehen sein, dass die Kamera einen Filter aufweist, der an die Wellenlänge des Lasers angepasst ist. Dadurch können die aufgenommenen Bilder ebenfalls verbessert werden.

Die Kamera kann als Long Distance Microscope ausgebildet sein. Dadurch kann die Oberfläche des Untersuchungsbereichs bzw. die helle Linie des Laserlichts an der Oberfläche in besonders vorteilhafter Weise aufgenommen werden.

Die Erfindung betrifft ferner einen Windkanal mit einem Versuchsraum, mit einem in dem Versuchsraum angeordneten Probenhalter zum Halten eines Objekts, mit einem Strömungserzeuger zur Erzeugung einer Fluidströmung in dem Versuchsraum, und mit einem erfindungsgemäßen optischen Oberflächenmesssystem.

Dabei kann vorgesehen sein, dass der Strömungserzeuger die Fluidströmung entlang einer Strömungsachse erzeugt, die auf den Probenhalter und somit auf ein in dem Probenhalter gehaltenen Objekt gerichtet ist. Die Strömungsachse kann beispielsweise identisch zu der Objektachse des optischen Oberflächenmesssystems sein.

Der Windkanal kann eine Heizeinrichtung zur Erhitzung der Fluidströmung aufweisen. Die Heizeinrichtung kann beispielsweise eine Lichtbogenheizeinrichtung sein.

Der Strömungserzeuger kann auch eine Partikelzuführung aufweisen, über die Partikel in die Fluidströmung einleitbar sind. Dadurch können Staubpartikel in einer Atmosphäre simuliert werden.

Die Erfindung betrifft ferner ein Verfahren zur optischen Oberflächenmessung eines Objekts in einem Windkanal, wobei das Objekt in einem Versuchsraum des Windkanals auf einer Objektachse des Windkanals angeordnet ist, mit folgenden Schritten:
a) Ausrichten einer Kamera auf einen Untersuchungsbereich des Objektes,
b) Bestrahlen des Untersuchungsbereichs mit einer Laserlichtebene, wobei die Laserlichtebene eine zu vermessende Oberfläche des Untersuchungsbereich in einem Winkel α schneidet, wobei gilt 5° ≤ α ≤ 90°, vorzugsweise 20° ≤ α ≤ 90°,
c) Aufnahme von mehreren zeitlich beabstandeten Bildern des Untersuchungsbereichs mit der Kamera während der Bestrahlung des Untersuchungsbereichs,
d) Auswerten der Bilder zur Erkennung einer Veränderung der zu vermessende Oberfläche.

Das erfindungsgemäße Verfahren kann insbesondere in einem erfindungsgemäßen Windkanal durchgeführt werden. Mittels des erfindungsgemäßen Verfahrens lassen sich Bilder, aus denen die Veränderung der zu vermessenden Oberfläche, insbesondere eine Rückgangrate der Oberfläche, in besonders vorteilhafter Weise erstellen und auswerten.

Vorzugsweise ist vorgesehen, dass in Schritt c) die mehreren Bilder in einem vorgegebenen Zeitabstand aufgenommen werden. Dadurch kann erreicht werden, dass der zeitliche Rückgang der Oberfläche auf einfache Art und Weise bestimmt werden kann. Ferner sind die Messungen durch einen vorgegebenen Zeitabstand in vorteilhafter Weise reproduzierbar.

Die Laserlichtebene kann mittels eines gepulsten Laserlichts erzeugt werden, wobei die Aufnahmen in Schritt c) mit dem gepulsten Laserlicht synchronisiert sind. Dadurch kann erreicht werden, dass in den Aufnahmen weitestgehend das Laserlicht aufgenommen wird und Licht, dass von der Oberfläche emittiert wird, kann bei den Aufnahmen vermieden werden.

Vorzugsweise weist das erfindungsgemäße Verfahren einen Kalibrierungsschritt mit folgenden Unterschritten auf:
i. Anordnen eines Kalibrierungsobjektes mit einer Kalibrierfläche in dem Versuchsraum, wobei die Kalibrierfläche vorzugsweise auf der Objektachse liegt,
ii. Ausrichten der Kamera auf die Kalibrierfläche,
iii. Aufnahme mindestens eines Bildes des Kalibrierungsobjektes mit der Kamera,
iv. Auswerten des mindestens einen Bildes zur Bestimmung von Umrechnungsdaten von einem Pixelraum der Kamera in einen metrischen Raum, wobei die Umrechnungsdaten vorzugsweise in einer Kalibrierungskarte gespeichert werden.

Mittels des Kalibrierungsschritts können in vorteilhafter Weise Umrechnungsdaten erstellt werden, über die aus während des Verfahrens aufgenommenen Bildern direkt auf metrische Werte geschlossen werden kann, sodass beispielsweise festgestellt werden kann, um wie viele Millimeter ein Rückgang der Oberfläche erfolgte. Durch die Anordnung der Kalibrierfläche in der Objektachse bzw. der Anordnung der Kalibrierfläche derart, dass die Objektachse in der Kalibrierfläche liegt, wird die Kalibrierung besonders vorteilhaft durchgeführt, da sich die Kalibrierfläche in einer der Position befindet, in der bei dem Verfahren auch das Objekt angeordnet ist bzw. sich die Laserlichtebene, wenn diese zu der Objektachse ausgerichtet ist.

Grundsätzlich ist zu bevorzugen, dass die Kalibrierfläche in der Ebene, in der sich bei dem Verfahren die Laserlichtebene erstreckt befindet. Dadurch kann eine besonders genaue Kalibrierung erfolgen.

Das Auswerten in Schritt d) kann mittels der Umrechnungsdaten, vorzugsweise mittels der Kalibrierungskarte erfolgen.

Im Rahmen der Erfindung können grundsätzlich etwaige in den Bildern auftretende Verzeichnungen oder perspektivische Verzerrung aufgrund der Anordnung der Kamera, der Laserlichtebene, des Objekts und/oder des Kalibrierungsobjektes durch bekannte Korrekturmethoden der Bildverarbeitung in den Bildern korrigiert werden. Verzeichnungen oder perspektivische Verzerrung aufgrund der Anordnung der Kamera können beispielsweise auch im Rahmen des Kalibrierungsschritts berücksichtigt werden, so dass diese in den Umrechnungsdaten enthalten sind. Selbstverständlich ist eine diesbezügliche separate Kalibrierung möglich.

Im Folgenden wird unter Bezugnahme auf die nachfolgenden Figuren die Erfindung näher erläutert. Es zeigen:
- Fig. 1: eine schematische Prinzipskizze eines Ausführungsbeispiels eines optischen Oberflächenmesssystems in einem Windkanal und
- Fig. 2a und 2b: schematische Darstellungen des Untersuchungsbereichs des Objektes zur Erläuterung der Funktion des optischen Oberflächenmesssystems.

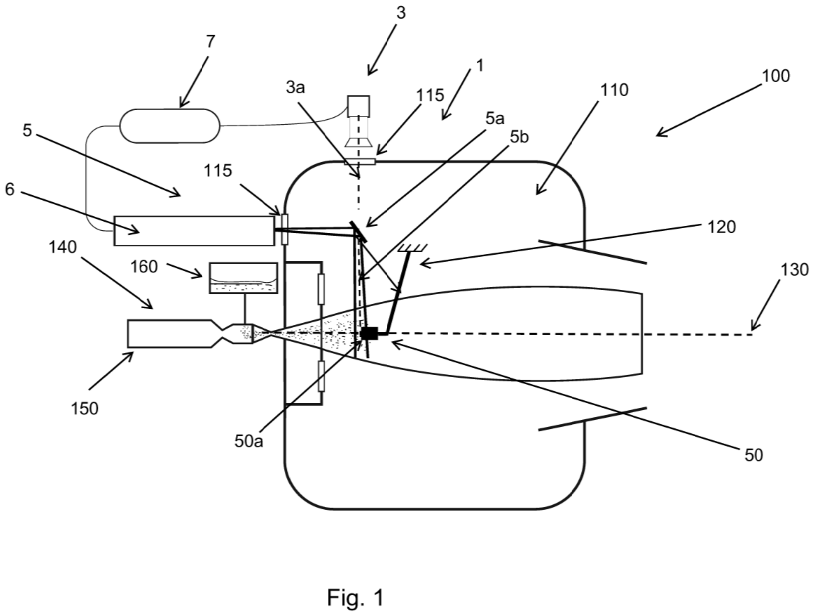

In Fig. 1 ist ein erfindungsgemäßes optisches Oberflächenmesssystem 1 zur Oberflächenmessung eines Objekts 50 in einem Windkanal 100 schematisch dargestellt.

Der Windkanal 100 weist einen Versuchsraum 110 auf, in dem das Objekt 50 mittels eines Probenhalters 120 gehalten ist. Das Objekt 50 wird mittels des Probenhalters 120 auf einer Objektachse 130 des Windkanals 100 angeordnet.

Der Windkanal 100 weist ferner einen Strömungserzeuger 140 auf, der in dem Versuchsraum 110 eine Strömung in Richtung der Objektachse 130 auf das Objekt 50 erzeugt. Der Strömungserzeuger 140 kann ferner eine Heizeinrichtung 150 aufweisen, über die die Fluidströmung erhitzbar ist. Insbesondere kann mittels des Strömungserzeugers 140 eine Hochenthalpieströmung erzeugt werden. Der Strömungserzeuger 140 kann ferner eine Partikelzuführung 160 aufweisen, mittels der Partikel der Fluidströmung zuführbar sind.

Das optische Oberflächenmesssystem 1 dient zur Oberflächenmessung des Objekts 50, um die Veränderung der Oberfläche des Objekts 50 zu beobachten bzw. zu bestimmen.

Das Oberflächenmesssystem 1 weist eine auf einen Untersuchungsbereich 50a des Objekts 50 gerichtete Kamera 3 sowie eine Laserlichtvorrichtung 5 auf, die auf den Untersuchungsbereich des Objekts 50 gerichtet ist. Die Kamers 3 ist außerhalb des Versuchsraums 110 angeordnet und blickt durch ein entsprechendes Fenster 115 in den Versuchsraum 110. Die Laserlichtvorrichtung 5 weist eine Laserlichtquelle 6 auf, die außerhalb des Versuchsraums 110 angeordnet und lenkt einen Laserstrahl durch ein weiteres Fenster 115 in den Versuchsraum 110. Die Laserlichtvorrichtung 5 weist ferner einen Spiegel 5a auf, der in dem Versuchsraum 110 angeordnet ist und den Laserstrahl in Richtung zu dem Objekt 50 ausrichtet. Die Laserlichtvorrichtung 5 erzeugt Licht in Form einer Laserlichtebene, die auf eine zu vermessende Oberfläche des Untersuchungsbereichs 50a des Objekts 50 trifft.

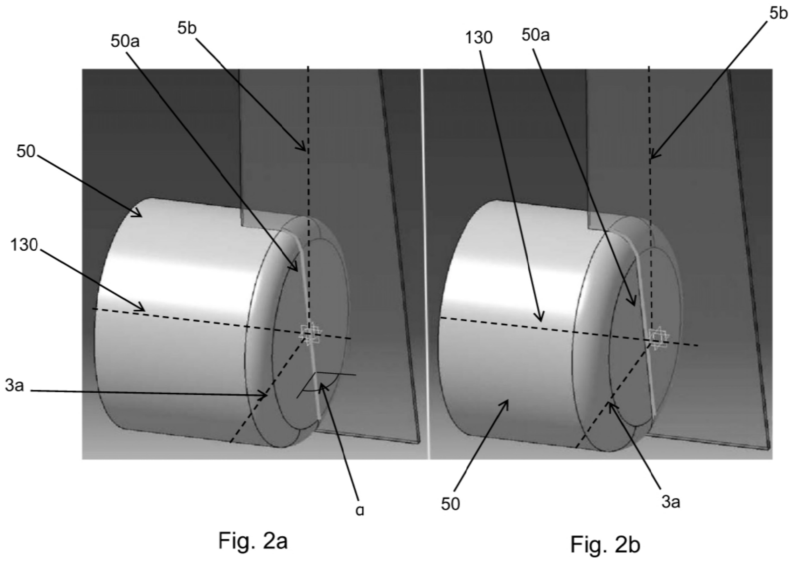

Wie am besten aus Fig. 2a ersichtlich ist, bildet die Laserlichtebene einen Winkel α zu einer zu vermessenden Oberfläche des Untersuchungsbereichs 50a des Objekts 50. Der Winkel α kann beispielsweise 90° sein.

Die Kamera 3 weist eine erste optische Achse 3a auf, die in Richtung des Objekts 50 verläuft. Die Laserlichtvorrichtung 5 weist eine zweite optische Achse 5b auf, die ebenfalls auf den Untersuchungsbereichs 50a des Objekts 50 gerichtet ist.

Die erste und die zweite optische Achse 3a, 5b können in Umfangsrichtung des Windkanals 100 versetzt zueinander verlaufen, was in Fig. 1 aufgrund der schematischen Darstellung in Form einer Seitenansicht nicht erkennbar ist. Beispielsweise können die erste und die zweite optische Achse 3a, 5b orthogonal zueinander verlaufen. Die erste optische Achse 3a und die zweite optische Achse 5b können insbesondere auch orthogonal zu der Objektachse 130 angeordnet sein.

Das Objekt 50 ist derart angeordnet, dass seine Mittelachse auf der Objektachse 130 des Windkanals 100 angeordnet ist. Die Laserlichtebene der Laserlichtvorrichtung 5 ist dabei auf die Objektachse 130 ausgerichtet, sodass die Objektachse 130 in der Laserlichtebene liegt.

Die Laserlichtebene schneidet das Objekt 50 somit quasi in der Mitte, wobei, wie aus den Fign. 2a und 2b hervorgeht, durch das Auftreffen des Laserlichts auf der Oberfläche des Objekts 50 ein stark erhellter Bereich entsteht, der eine helle Linie entlang der Oberfläche des Untersuchungsbereichs 50a des Objekts 50 bildet. Diesen Umstand macht sich das erfindungsgemäße Oberflächenmesssystem 1 zu Nutze und die Kamera 3 nimmt in einem zeitlichen Abstand Bilder des Untersuchungsbereichs 50a auf. Der die helle Linie entlang der Oberfläche des Objekts 50 kann in den Bildern der Kamera 3 in vorteilhafter Weise erkannt werden. Fign. 2a und 2b zeigen Bilder des Objekts 50 zu unterschiedlichen Zeitpunkten, die miteinander verglichen werden können. Wie aus den Fign. 2a und 2b kann eine Veränderung der Oberfläche anhand der Veränderung der hellen Linien in den Bildern erkannt werden. In Fig. 2a ist das Objekt im Ursprungszustand gezeigt. In Fig. 2b kann ein deutlicher Rückgang der Oberfläche erkannt werden.

Das erfindungsgemäße optische Oberflächenmesssystem 1 hat den Vorteil, dass eine Messung auch in-situ, das heißt während des Betriebs des Windkanals 100 erfolgen kann. Über die zu unterschiedlichen Zeiten aufgenommenen Bilder kann die Oberfläche des Objekts 50 und insbesondere ein Rückgang der Oberfläche des Objekts 50 beobachtet werden, sodass auf eine Rückgangsrate des Materials des Objekts 50 geschlossen werden kann.

Das Laserlicht kann gepulst sein, wobei die Kamera 3 mit der Laserlichtquelle 6 synchronisiert ist. Dazu kann eine gemeinsame Steuerung 7 vorgesehen sein, die die Laserlichtvorrichtung 5 und die Kamera 3 steuert

Die Kamera 3 kann beispielsweise als Long Distance Microscope ausgebildet sein. Die Laserlichtquelle 6 kann ein Nd:YAG-Laser sein.

### Bezugszeichenliste

- 1: Oberflächenmesssystem
- 3: Kamera
- 3a: erste optische Achse
- 5: Laserlichtvorrichtung
- 5a: Spiegel
- 5b: zweite optische Achse
- 6: Laserlichtquelle
- 7: Steuerung
- 50: Objekt
- 50a: Untersuchungsbereich
- 100: Windkanal
- 110: Versuchsraum
- 115: Fenster
- 120: Probenhalter
- 130: Objektachse
- 140: Strömungserzeuger
- 150: Heizeinrichtung
- 160: Partikelzuführung

- α: Winkel

## Patentansprüche

1. Optisches Oberflächenmesssystem (1) zur Oberflächenmessung eines Objekts (50) in einem Windkanal (100),
mit einer auf einen Untersuchungsbereich (50a) des Objektes (50) gerichteten Kamera (3) und mit mindestens einer Laserlichtvorrichtung (5), die auf den Untersuchungsbereich (50a) des Objektes (50) gerichtet ist,
wobei die Laserlichtvorrichtung (5) eine Laserlichtebene erzeugt, die auf eine zu vermessende Oberfläche des Untersuchungsbereichs (50a) des Objektes (50) in einem Winkel α trifft, wobei gilt 5° ≤ α ≤ 90°.

2. Optisches Oberflächenmesssystem nach Anspruch 1, **dadurch gekennzeichnet, dass** gilt: α=90°.

3. Optisches Oberflächenmesssystem nach Anspruch 1 oder 2, **gekennzeichnet durch** eine Objektachse (130), in der das Objekt (50) mit einer Mittelachse des Objekts (50) oder des Untersuchungsbereichs (50a) anordenbar ist, wobei die Laserlichtvorrichtung (5) die Laserlichtebene parallel zu der Objektachse (130), vorzugsweise auf die Objektachse (130) ausrichtet.

4. Optisches Oberflächenmesssystem nach einem der Ansprüche 1 bis 3, **dadurch gekennzeichnet, dass** die Kamera (3) eine erste optische Achse (3a) aufweist und die Laserlichtvorrichtung (5) eine zweite optische Achse (5b) aufweist, wobei die erste und die zweite optische Achse (3a, 5b) vorzugsweise orthogonal zueinander sind.

5. Optisches Oberflächenmesssystem nach Anspruch 4, **dadurch gekennzeichnet, dass** die erste optische Achse (3a) orthogonal zu der Objektachse (130) ist.

6. Optisches Oberflächenmesssystem nach einem der Ansprüche 1 bis 5, **dadurch gekennzeichnet, dass** die Laserlichtvorrichtung (5) einen Nd:YAG-Laser als Laserlichtquelle (6) aufweist.

7. Optisches Oberflächenmesssystem nach einem der Ansprüche 1 bis 6, **dadurch gekennzeichnet, dass** die Laserlichtvorrichtung (5) gepulstes Laserlicht ausgibt, wobei die Kamera (3) mit der Laserlichtvorrichtung (5) synchronisiert ist.

8. Optisches Oberflächenmesssystem nach einem der Ansprüche 1 bis 7, **dadurch gekennzeichnet, dass** die Kamera (3) als Long Distance Microscope ausgebildet ist.

9. Windkanal (100) mit einem Versuchsraum (110), mit einem in dem Versuchsraum angeordneten Probenhalter (120) zum Halten eines Objekts (50), mit einem Strömungserzeuger (140) zur Erzeugung einer Fluidströmung in dem Versuchsraum (110) und mit einem optischen Oberflächenmesssystem (1) nach einem der Ansprüche 1 bis 8.

10. Windkanal nach Anspruch 9, **dadurch gekennzeichnet, dass** der Strömungserzeuger (140) eine Heizeinrichtung (150) zur Erhitzung der Fluidströmung aufweist.

11. Windkanal nach Anspruch 9 oder 10, **dadurch gekennzeichnet, dass** der Strömungserzeuger (140) eine Partikelzuführung (160) aufweist.

12. Verfahren zur optischen Oberflächenmessung eines Objekts (50) in einem Windkanal (100), wobei das Objekt in einem Versuchsraum (110) des Windkanals (100) auf einer Objektachse (130) des Windkanals (100) angeordnet ist, mit folgenden Schritten:
a) Ausrichten einer Kamera (3) auf einen Untersuchungsbereich (50a) des Objektes (50),
b) Bestrahlen des Untersuchungsbereichs (50a) des Objektes (50) mit einer Laserlichtebene, wobei die Laserlichtebene auf eine zu vermessende Oberfläche des Untersuchungsbereich (50a) des Objektes (50) in einem Winkel α trifft, wobei gilt 5° ≤ α ≤ 90°,
c) Aufnahme von mehreren zeitlich beabstandeten Bildern des Untersuchungsbereichs (50a) des Objektes (50) mit der Kamera (3) während der Bestrahlung des Untersuchungsbereichs (50a) des Objektes (50),
d) Auswerten der Bilder zur Erkennung einer Veränderung der zu vermessende Oberfläche.

13. Verfahren nach Anspruch 12, **dadurch gekennzeichnet, dass** in Schritt c) die mehrere Bilder in einem vorgegebene Zeitabstand aufgenommen werden und/oder
dass die Laserlichtebene mittels eines gepulsten Laserlichts erzeugt wird, wobei die Aufnahmen in Schritt c) mit dem gepulsten Laserlicht synchronisiert sind.

14. Verfahren nach Anspruch 12 oder 13, **gekennzeichnet durch** einen Kalibrierungsschritt, mit folgenden Unterschritten:
i) Anordnen eines Kalibrierungsobjektes mit einer Kalibrierfläche in dem Versuchsraum (110), wobei die Kalibrierfläche vorzugsweise in der Objektachse liegt,
ii) Ausrichten Kamera (3) auf die Kalibrierfläche,
iii) Aufnahme mindestens eines Bildes des Kalibrierungsobjektes mit der Kamera (3)
iv) Auswerten des mindestens einen Bildes zur Bestimmung von Umrechnungsdaten von einem Pixelraum der Kamera (3) in einen metrischen Raum, wobei die Umrechnungsdaten vorzugsweise in einer Kalibrierungskarte gespeichert werden.

15. Verfahren nach Anspruch 14, **dadurch gekennzeichnet, dass** das Kalibrierungsobjekt auf der Objektachse (130) des Windkanals (100) angeordnet ist und/oder dass das Auswerten in Schritt d) mittels der Umrechnungsdaten erfolgt.
